(19) **Europäisches Patentamt**

**European Patent Office**

**Office européen des brevets**

(11) Veröffentlichungsnummer: **0 133 455**
**B1**

(12) # EUROPÄISCHE PATENTSCHRIFT

(45) Veröffentlichungstag der Patentschrift:
**12.06.87**

(51) Int. Cl.⁴: **B 65 D 45/00,** F 16 L 21/08,
F 16 L 41/08, F 16 J 15/10

(21) Anmeldenummer: **84105609.6**

(22) Anmeldetag: **17.05.84**

(54) **Verschluss- oder Kupplungsvorrichtung.**

(30) Priorität: 03.06.83 DE 8322349 U
17.03.84 DE 3409906
17.03.84 DE 3409907
10.03.84 DE 3408835
07.04.84 DE 3413155

(43) Veröffentlichungstag der Anmeldung:
**27.02.85 Patentblatt 85/9**

(45) Bekanntmachung des Hinweises auf die Patenterteilung:
**12.06.87 Patentblatt 87/33**

(84) Benannte Vertragsstaaten:
**AT BE CH DE FR GB IT LI LU NL SE**

(56) Entgegenhaltungen:
**AT-C-4 198**
**CH-A-396 534**
**CH-A-406 756**
**DD-A-100 070**
**DE-A-1 950 269**
**DE-A-2 639 739**
**DE-B-1 949 746**
**DE-C-802 293**
**DE-C-880 846**
**DE-C-916 268**
**DE-U-6 937 817**
**FR-A-926 488**
**FR-A-2 067 559**
**FR-A-2 520 840**

(73) Patentinhaber: **Firma Carl Freudenberg, Höhnerweg 4, D-6940 Weinheim/Bergstrasse (DE)**

(72) Erfinder: **Bauder, Kurt, Sommergasse 44, D-6940 Weinheim (DE)**

(74) Vertreter: **Weissenfeld- Richters, Helga, Dr., Höhnerweg 2, D-6940 Weinheim/Bergstrasse (DE)**

(56) Entgegenhaltungen: (Fortsetzung)
**US-A-3 462 175**
**US-A-4 350 351**

## Beschreibung

Die Erfindung betrifft eine Verschluß- oder Kupplungsvorrichtung zur koaxialen Festlegung eines Zylinderteiles in einer durch eine Kegelfläche begrenzten Ausnehmung, deren Durchmesser in Fügerichtung zunehmend erweitert ist, umfassend einen ringförmigen Klemmkörper aus inkompressiblem, elastisch nachgiebigem Material, der in der Ausnehmung angeordnet ist und eine an das Profil der Ausnehmung angepaßte Querschnittsgestalt aufweist, wobei eine Stützeinrichtung für den Klemmkörper vorgesehen ist, die eine nennenswerte axiale Verlagerung desselben in der Ausnehmung während des Einfügens des zylindrischen Teiles verhindert.

Eine solche Verschluß- oder Kupplungsvorrichtung ist aus der DE-A-1949 746 bekannt. Der Klemmkörper wird dabei vor dem Zusammenfügen der zu verbindenden Teile in die Kegelfläche eingesetzt und erfährt während des Fügevorganges eine erhebliche Deformierung in radialer und axialer Richtung. Der für den Fügevorgang erforderliche Kraftaufwand ist dementsprechend erheblich.

Der Erfindung liegt die Aufgabe zugrunde, eine Verschlußoder Kupplungsvorrichtung der eingangs genannten Art derart weiterzuentwickeln, daß die einzelnen Teile bei Gewährleistung einer guten Zugfestigkeit der erhaltenen Verbindung leichter zusammenfügbar sind.

Diese Aufgabe wird erfindungsgemäß dadurch gelöst, daß der Innendurchmesser des Klemmkörpers im Bereich der axialen Erstreckung der Kegelfläche geringfügig größer ist als der Außendurchmesser des aufzunehmenden Zylinderteils, wobei der Klemmkörper in diesem Bereich nur an der Kegelfläche anliegt und daß der Klemmkörper in dem axialen Abschnitt, der außer Eingriff mit der Kegelfläche ist, ein sich in axialer Richtung erstreckendes Ringmembranteil aufweist, dessen Innendurchmesser kleiner ist als der Außendurchmesser des aufzunehmenden Zylinderteils, an dem es anliegt.

Die Verwendung der erfindungsgemäßen Verschluß- oder Kuppllungsvorrichtung ist sehr einfach. Sie beschränkt sich auf das Einschieben des festzulegenden Teiles in die den Klemmkörper bereits enthaltende Ausnehmung. Dieser hat im Bereich der axialen Erstreckung der Kegelfläche einen größeren Durchmesser als der Zylinderkörper, wodurch eine Verformungsarbeit nur im axialen Bereich der Ringmembran geleistet werden muß. Der freie Innenquerschnitt des Ringmembranteils ist etwas kleiner gehalten als der Außenquerschnitt des Zylinderteiles.

Das Ringmembranteil besteht aus demselben, weichelastischen Weristoff wie der Klemmkörper und ist in radialer Richtung frei beweglich. Die zur Erzeugung der erforderlichen Defor mierung benötigten Kräfte sind daher sehr gering. Relativ große Toleranzen hinsichtlich des Außendurchmessers des Zylinderteiles können überbrückt werden.

Im Gegensatz zu der relativ einfachen Einführung des Zylinderteiles in den Klemmkörper ist dessen Entnahme nicht ohne weiteres möglich. Wird auf das fertig montierte Zylinderteil eine rückwärts gerichtete Kraft ausgeübt, so wird diese über das unter elastischer Vorspannung an den Zylinderteil anliegende Ringmembranteil auf den Klemmkörper übertragen. Dieser liegt außenseitig an der Kegelfläche an, deren Querschnitt sich keilförmig in rückwärtiger Richtung vermindert. Der Klemmkörper gelangt dadurch auch im Bereich der axialen Erstreckung der Kegelfläche zur Anlage an dem Zylinderteil und wird zwischen diesem und der Kegelfläche radial verpreßt. Der Grad der Verpressung ist von dem Winkel abhängig, den die Kegelfläche und die Zylinderfläche ein schließen, sowie von der Größe der eingeleiteten Kräfte. Ein Winkel zwischen der Kegelfläche und der Gegenfläche von 5 bis 35° hat sich ausgezeichnet bewahrt, wobei ein sich in Richtung der Ringmembran degressiv verkleinernder Winkel eine verbesserte Ansprechempfindlichkeit ergibt, ein sich in Richtung der Ringmembran progressiv vergrößernder Winkel eine verbesserte Relativbeweglichkeit der zusammengefügten Teile bei Verkantungsbeanspruchungen. Die erhaltene Verbindung kann in jedem Falle als unlösbar bezeichnet werden. In Fällen, in denen die Möglichkeit der zerstörungsfreien Auflösung der Verbindung zwingend nötig ist, besteht jedoch ebenfalls eine Verwendungsmöglichkeit, wenn das Zylinderteil mit einem Gewinde versehen wird. Das Zylinderteil kann in diesem Falle nachträglich aus dem Klemmkörper herausgeschraubt werden. Der Gewindegang kann bei einer solchen Ausführung eine Neigung zum Undichtwerden bedingen. Ihr läßt sich durch eine möglichst feine Ausbildung des Gewindes begegnen sowie durch die Einlagerung einer dauerplastischen Dichtungsmasse, beispielsweise von Vaseline oder Fett. Da die Zusammenfügung der Verschluß- oder Kupplungsvorrichtung keinerlei Schraubvorgänge erfordert, ist eine Verdrängung der Dichtmasse hierbei ausgeschlossen.

Der Klemmkörper ist im Bereich der axialen Erstreckung der Kegelfläche geringfügig größer als der Außendurchmesser des aufzunehmenden Zylinderteils. Der Abstand zwischen beiden beträgt zweckmäßig nicht mehr als 1 - 2 Zehntelmillimeter.

Die axiale Länge des Ringmembranteils soll nicht größer sein als der Durchmesser des Zylinderteils und zweckmäßig 5 bis 15 % vom Durchmesser desselben betragen, die Dicke der Ringmembrane 1 bis 3 % vom Durchmesser des Zylinders. Eine Anpassung des Profils an dasjenige der bekannten Dichtlippen ist möglich. Das Ringmembranteil hat den primären Zweck, den Klemmkörper zu aktivieren, wenn rückwärts gerichtete Zugkräfte auf das aufgenommene Zylinderteil ausgeübt werden. In diesem Sinne ist es vorteilhaft, wenn sich das Ringmembranteil möglichst dicht an die Oberfläche des Zylinderteiles anschmiegt und in sich besonders flexibel ist. Eine dünne Auslegung ist daher vorteilhaft. Sie findet ihre Grenze in der notwendigen Widerstandsfähigkeit in mechanischer Hinsicht.

Der Klemmkörper besteht aus einem elastisch nachgiebigen, polymerem Werkstoff und ist in hohem Maße verformbar und anpassungsfähig. Winkelverlagerungen zwischen der Achse des Zylinderkörpers und derjenigen der Kegelfläche sind im allgemeinen ohne Bedeutung für das erzielte Festlegungsergebnis und können in Kauf genommen werden.

Der Klemmkörper besteht bevorzugt aus nichtgeschäumtem Gummi. Zur Anwendung gelangen können die üblichen elastomeren Dichtungswerkstoffe, beispielsweise Nitrilbutadien-Kautschuk, Ethylen-Propylen-Terpolymer-Kautschuk, Ventilyden-Fluorid-Hexafluorethylen-Kautschuk, Acrylnitril-Chloropren-Kautschuk oder Epichlorhydrin-Kautschuk.

Die Oberfläche des Klemmkörpers kann gegebenenfalls mit einer geschäumten Schicht versehen werden, um eine verbesserte Anschmiegung zu erreichen, wenn die Kegelfläche oder die Oberfläche des Zylinderteiles eine reliefartig zerklüftete Oberflächenstrukturierung aufweist. Die Härte des zur Anwendung gelangenden Werkstoffes liegt etwa im Bereich zwischen 30 und 80 shore A. Werkstoffe dieser Art sind günstig verfügbar. Sie lassen sich durch an sich bekannte Verfahren leicht in die gewünschte Gestalt überführen.

Die Kegelfläche und das Zylinderteil sollen einen Winkel von 5 bis 35° einschließen, vorteilhaft einen solchen von 10 bis 18°. Neben einer leichten Zusammenfügbarkeit der Einzelteile ist hierdurch die Erzielung einer besonders zugstabilen Verbindung gewährleistet.

Die erfindungsgemäße Verschluß- oder Kupplungsvorrichtung kann in der vorstehend beschriebenen Gestalt zur Anwendung gelangen, jedoch gegebenenfalls auch in einer modifizierten Ausführung als Kabeltülle, bei der diebstahlsicheren Festlegung von Kfz.-Kennzeichen oder bei der Festlegung der Rohre in einer Rohrhalteplatte. Dabei kann sich aus Verpackungsgründen die Zusammenfassung von mehreren Einheiten in einer in sich geschlossenen Matte oder in spiegelbildlicher gegenseitiger Zuordnung empfehlen.

Der Gegenstand der vorliegenden Erfindung wird nachfolgend anhand in der als Anlage beigefügten Zeichnung weiter erläutert. Es zeigen:

Figur 1
eine Anwendung der beanspruchten Vorrichtung bei der Festlegung des Endes eines Zughakens.

Figur 2
eine Anwendung für die gegenseitige Verbindung der Enden zweier geradlinig aneinanderstoßende Rohre.

Figur 3
eine Anwendung für die gegenseitige Verbindung zweier winkelig aneinanderstoßende Rohre.

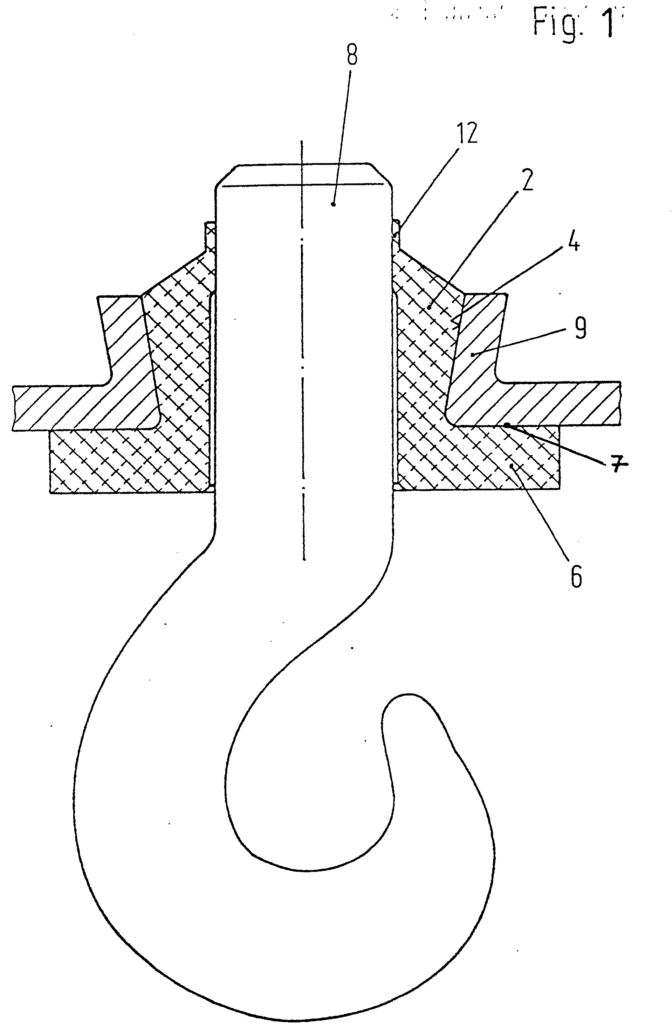

Bei der Vorrichtung nach Figur 1 besteht das Teil 9 aus Stahlblech und ist einstückig aus der Wandung eines Gehäuses geformt. Die Öffnung ist rotationssymmetrisch ausgebildet und weist einen sich in rückwärtiger Richtung kegelig erweiternden Innenquerschnitt auf. Die einander gegenüberliegenden Innenflächen der so gebildeten Kegelfläche schließen einen Winkel von 20° ein.

Konzentrisch in der Hülse ist das Zylinderteil 8 gelagert. Dieses bildet das hintere Ende eines Zughakens. Das Zylinderteil 8 besteht ebenfalls aus Stahl und ist ebensowenig nachgiebig wie das Teil 9.

In dem Spalt zwischen dem Zylinderteil 8 und dem Teil 9 ist der Klemmkörper 2 angeordnet. Dieser füllt den Spalt im wesentlichen aus und besteht aus einem gummielastischen Werkstoff mit einer Härte shore A von etwa 55. Er läßt sich dadurch leicht verformen und noch vor dem Einfügen des Zylinderteiles 8 in der Öffnung von Teil 9 positionieren. Dabei gelangt die Außenseite an der kegelig nach oben erweiterten Kegelfläche 4 der Öffnung zur Anlage und der in radialer Richtung nach außen vorspringende Flansch 6 an der Haltefläche 7 von Teil 9.

Der Innendurchmesser des Klemmkörpers 2 ist im Bereich der axialen Erstreckung der Kegelfläche 4 geringfügig größer als der Außendurchmesser des Zylinderteiles 8. Das Spiel beträgt etwa ein Zehntel Millimeter. Es ermöglicht ein leichtes Einsetzen und Einschieben des aufzunehmenden Zylinderteiles in die Öffnung des Klemmkörpers 2.

Am oberen Ende ist der Innendurchmesser des Klemmkörpers 2 durch das in sich geschlossene Ringmembranteil 12 vermindert auf einen Wert, der herstellungsbedingt unterhalb des Außendurchmessers des Zylinderteiles 8 liegt. Das Ringmembranteil ist der axialen Erstreckung der Kegelfläche 4 axial benachbart und weist infolge seiner geringen radialen Dicke eine leichte Verformbarkeit auf. Die für das vollständige Einschieben des Teiles 8 erforderlichen Verformungskräfte sind daher nicht sehr groß und lassen sich leicht aufbringen. Das Ringmembranteil 12 schmiegt sich nach dem Einfügen des Zylinderteiles 8 gleichmäßig an dessen Oberfläche an und bewirkt eine kraftschlüssige Verbindung. Wird anschließend auf den Haken eine nach unten gerichtete Zugkraft ausgeübt, dann ergibt sich eine unmittelbare Einleitung der Kräfte über den Vorsprung in den Klemmkörper 2. Dieser besteht aus einem leicht nachgiebigen, jedoch nicht komprimierbaren Material. Die den Klemmkörper in die sich kegelig in ihrem Querschnitt verjüngende Hülse pressenden Kräfte können daher auch lediglich solange zu dessen Verformung führen, wie von dem ursprünglich vorhandenen Spiel noch ein Rest vorhanden ist. Ist dieser ausgefüllt, dann findet eine weitere Deformierung des Klemmkörpers unabhängig von der Weichheit des verwendeten Materials nicht mehr statt, d. h. das Zylinderteil 8 ist in axialer Richtung unverrückbar festgelegt. Die über den Haken übertragbaren Zugkräfte sind daher beliebig groß und im wesentlichen abhängig von der mechanischen Widerstandsfähigkeit des Zylinderteiles 8 und des Teiles 9.

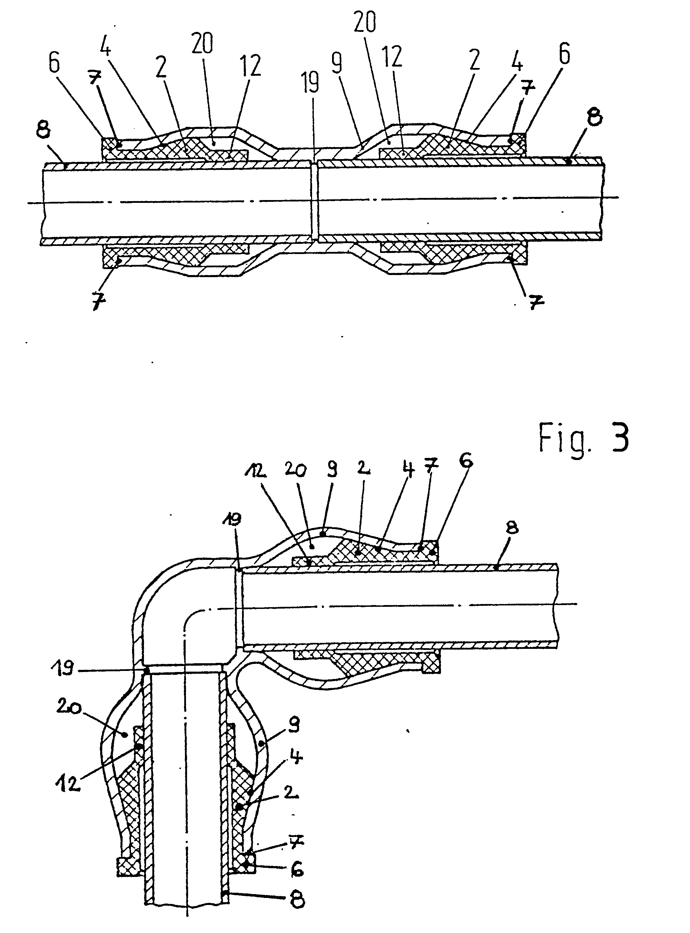

Figur 2 nimmt Bezug auf die Verwendung der Verschluß- oder Kupplungsvorrichtung im Rahmen eines Bausatzes zur gegenseitigen Verbindung geradlinig aneinander anstoßender Rohrenden (8). Das eine Hülse bildende Teil 9 besteht in diesem Falle aus PVC und weist im mittleren Teil seiner axialen Erstreckung sowie an den beiderseitigen Enden eine Verminderung des Innenquerschnittes auf. Diese dient der Führung der eingeschobenen Rohrenden, wobei im mittleren Bereich ein nach innen ragender Vorsprung 19 der Hülse vorgesehen ist, der als Anschlagsbegrenzung dient.

Die Klemmkörper 2 sind ebenso wie die Hülse rotationssymmetrisch ausgebildet und von den einander abgewandten Enden vor Einfügung der Rohre in diese eingeschoben.

Die Klemmkörper bestehen aus Weichgummi und weisen einen umlaufenden Flansch 6 auf, der sich nach dem Einfügen in die Hülse an deren stirnseitiger Haltefläche 7 anlegt und auf diese Weise die richtige Zuordnung der Klemmfläche zu der in ihrem Querschnitt kegelig in auswärtiger Richtung verminderten Kegelfläche 4 der Hülse gewährleistet. Der Innendurchmesser des Klemmkörpers ist im Bereich der axialen Erstreckung der Kegelfläche 4 geringfügig größer ausgelegt als der Außendurchmesser des einzuschiebenden Rohres. Dieses läßt sich dadurch leicht in dem vormontierten Rohrverbinder einschieben.

Auch in diesem Falle ist der Klemmkörper 2 mit einem durch ein Ringmembranteil 12 gebildeten Vorsprung versehen, der der axialen Erstreckung der Kegelfläche 9 axial benachbart ist. Der Innendurchmesser des Ringmembranteiles 12, das einstückig aus dem Körper des Klemmkörpers 2 herausgeformt ist, ist geringfügig kleiner als der Außendurchmesser des Rohres 8.

Zur Montage des Rohres 8 ist es lediglich erforderlich, den fertig montierten Rohrverbinder auf das Ende des Rohres aufzustecken und so weit vorzuschieben, bis die Stirnfläche des Rohres an dem Vorsprung 19 der Hülse anliegt. Wird anschließend auf das Rohr eine auswärts gerichtete Kraft ausgeübt, so resultiert ähnlich wie im vorstehend geschilderten Fall über das Ringmembranteil 12 eine Übertragung auf den kegelig verjüngten Klemmkörper 2 und damit dessen radiale Verpressung zwischen der Außenwandung des Rohres und der Kegelfläche 4 der Hülse. Ein Entnehmen des Rohres ist daher nicht mehr möglich.

Ein ähnlicher Effekt resultiert, wenn ein fließfähiges Medium in das Rohr eingeleitet wird, beispielsweise unter Druck stehendes Gas oder Wasser. Da die Stirnwand des Rohres an dem Vorsprung 19 nicht abgedichtet ist, gelangt das fließfähige Medium ohne weiteres in den ringförmig ausgebildeten Freiraum 20. Dieser ist dem Klemmkörper 2 im Bereich seiner größten radialen Erstreckung axial vorgelagert, was dazu führt, daß der Druck des in der Rohrleitung enthaltenen Mediums ähnlich wie im vorstehend geschilderten Falle zu einer radialen Verpressung des Klemmkörpers 2 zwischen der Rohrwandung und der Kegelfläche 4 der Hülse führt. Ein gutes Abdichtungsergebnis und eine gute axiale Festlegung des eingeschobenen Rohres ist hiervon die Folge.

Figur 3 nimmt Bezug auf ein Ausführungsbeispiel, bei dem die beiden zu verbindenden Rohrenden einander unter einem Winkel von 90° zugeordnet sind. Die die beiden Rohrenden übergreifende Hülse ist dementsprechend abgewinkelt, sie weist indessen dieselben Klemmkörper 2 und dieselbe Funktion auf wie vorstehend beschrieben.

Andere als in den Figuren 2 und 3 beschriebene Ausführungen von Rohrverbindern sind möglich. Sie umfassen alle im Sanitärbereich benötigten Grundformen, insbesondere T-Stücke, Kreuzstücke, Winkelstücke mit verschiedenen Winkeln und Übergangsstücke für die gegenseitige Verbindung von Rohren eines unterschiedlichen Durchmessers. Bei den in den Figuren 2 und 3 gezeigten Ausführungsbeispielen wird die räumliche Lage des stirnseitigen Endes der eingeschobenen Rohre in axialer Richtung durch den Vorsprung 19 bestimmt, in radialer Richtung durch eine entsprechende Einschnürung des Innendurchmessers der Hülse. Letzterer kann das Ende des Rohres indessen mit einem geringen Abstand umgeben, was es ermöglicht, Winkelverlagerungen zwischen den zu verbindenden Rohrenden auszugleichen. Der Anschlag kann mit wenigstens einer axialen Durchbrechung versehen sein, um einen schnellen Druckaufbau im Freiraum 20 zu begünstigen.

Bei den in den Figuren 1 bis 3 gezeigten Ausführungsbeispielen ist der Klemmkörper lediglich lose in die Hülse eingesetzt. Die Montage des Klemmkörpers 2 ist hierdurch besonders einfach. In besonderen Anordnungsfällen ist es hingegen auch möglich, die Hülse und den Klemmkörper 2 gegebenenfalls zu verkleben. Insbesondere sehr große, axial gerichtete Zugkräfte lassen sich hierdurch besser auf die Hülse übertragen. Die den Klemmkörper in radialer Richtung begrenzenden Flächen sind im allgemeinen an die Oberflächengestalt der relativ zueinander festzulegenden Flächen angepaßt. Nennenswerte Oberflächenunregelmäßigkeiten sind hier im allgemeinen nicht vorhanden, weshalb eine entsprechende Ausbildung des Klemmkörpers ohne weiteres zu dem erwünschten Ergebnis führt. Die Herstellung ist dementsprechend einfach und kostengünstig möglich.

Eine entsprechende Ausbildung kann in Hinblick auf die Er zielung eines guten Abdichtungsergebnisses dann problematisch sein, wenn die relativ zueinander festzulegenden Oberflächen starke Unregelmäßigkeiten aufweisen, was beispielsweise bei Beton- oder Gußwerkstoffen häufig der Fall ist. Um auch in diesen Fällen eine gute Abdichtung zu erzielen, hat es sich als zweckmäßig erwiesen, den Klemmkörper auf den entsprechenden Flächen mit einer Vielzahl von axial benachbarten, sich in Umfangsrichtung erstreckenden Rippen zu versehen. Die einzelnen Rippen haben nur eine sehr geringe axiale Erstreckung und eine dementsprechend große Anschmiegsamkeit. Sie vermögen dadurch leicht in die Oberflächenunregelmäßigkeiten entsprechender Werkstoffoberflächen einzudringen und auf diese Weise eine dichte Verbindung zu realisieren. Die einzelnen in axialer Richtung aufeinanderfolgenden Rippen ergänzen sich dabei in ihrer Wirkung, so daß auch in diesem ungünstigen Falle neben einer guten Festlegung ein zuverlässiges Abdichtungsergebnis stets gewährleistet ist.

## Patentansprüche

1. Verschluß- oder Kupplungsvorrichtung zur koaxialen Festlegung eines Zylinderteiles (8) in einer durch eine Kegelfläche (4) begrenzten Ausnehmung, deren Durchmesser in Fügerichtung zunehmend erweitert ist, umfassend einen ringförmigen Klemmkörper (2) aus inkompressiblem, elastisch nachgiebigem Material, der in der Ausnehmung angeordnet ist und eine an das Profil der Ausnehmung angepaßte Querschnittsgestalt aufweist, wobei eine Stützeinrichtung (6) für den Klemmkörper (2) vorgesehen ist, die eine nennenswerte axiale Verlagerung desselben in der Ausnehmung während des Einfügens des zylindrischen Teiles (8) verhindert, dadurch gekennzeichnet, daß der Innendurchmesser des Klemmkörpers (2) im Bereich der axialen Erstrekkung der Kegelfläche (4) geringfügig größer ist als der Außendurchmesser des aufzunehmenden Zylinderteiles (8), wobei der Klemmkörper (2) in diesem Bereich nur an der Kegelfläche (4) anliegt und daß der Klemmkörper (2) in dem axialen Abschnitt, der außer Eingriff mit der Kegelfläche (4) ist, ein sich in axialer Richtung erstreckendes Ringmembranteil (12) aufweist, dessen Innendurchmesser kleiner ist als der Außendurchmesser des aufzunehmenden Zylinderteils (8), an den es anliegt.

2. Verschluß- oder Kupplungsvorrichtung nach Anspruch 1, dadurch gekennzeichnet, daß die axiale Länge des Ringmembranteils (12) 5 bis 15 % vom Durchmesser der Zylinderhülse (8) beträgt.

3. Verschluß- oder Kupplungsvorrichtung nach Anspruch 1 bis 2, dadurch gekennzeichnet, daß die Dicke des Ringmembranteils 1 bis 3 % vom Durchmesser·des Zylinderteils (8) beträgt.

4. Verschluß- oder Kupplungsvorrichtung nach Anspruch 1 bis 3, dadurch gekennzeichnet, daß der Klemmkörper (2) aus nicht geschäumtem Gummi besteht.

5. Verschluß- oder Kupplungsvorrichtung nach Anspruch 1 bis 4, dadurch gekennzeichnet, daß die Kegelfläche (4) und das Zylinderteil (8) einen Winkel von 5 bis 35° einschließen.

6. Verschluß- oder Kupplungsvorrichtung nach Anspruch 1 bis 5, dadurch gekennzeichnet, daß die Kegelfläche (4) und das Zylinderteil (8) einen Winkel von 10 bis 18° einschließen.

## Claims

1. A sealing or coupling device for fixing a cylindrical part (8) coaxially in a recess which is limited by a conical surface (4) and the diameter of which widens increasingly in the direction of insertion, comprising an annular clamping body (2) which is made of incompressible elastically flexible material and which is arranged in the recess and has a cross-sectional form matching the profile of the recess, a supporting device (6) beig provided for the clamping body (2) and preventing any appreciable axial shifting of the latter in the recess during the insertion of the cylindrical part (8), characterised in that the inside diameter of the clamping body (2) in the region of the axial extension of the conical surface (4) is slightly larger than the outside diameter of the cylindrical part (8) to be received, the clamping body (2) resting only against the conical surface (4) in this region, and in that the clamping body (2) has in the axial portion not engaged with the conical surface (4) an annular diaphragm part (12) which extends in the axial direction and the inside diameter of which is less than the outside diameter of the cylindrical part (8) to be received, against which it rests.

2. A sealing or coupling device according to claim 1, characterised in that the axial length of the annular diaphragm part (12) is 5 to 15 % of the diameter of the cylindrical sleeve (8).

3. A sealing or coupling device according to claim 1 or 2, characterised in that the thickness of the annular diaphragm part is 1 to 3 % of the diameter of the cylindrical part (8).

4. A sealing or coupling device according to any of claims 1 to 3, characterised in that the clamping body (2) consists of non-foamed rubber.

5. A sealing or coupling device according to any of claims 1 to 4, characterised in that the conical surface (4) and the cylindrical part (8) form an angle of from 5 to 35° relative to one another.

6. A sealing or coupling device according to any of claims 1 to 5, characterised in that the conical surface (4) and the cylindrical part (8) form an angle of from 10 to 18° relative to one another.

## Revendications

1. Dispositif de fermeture ou d'accouplement pour la fixation coaxiale d'une pièce cylindrique (8) dans un évidement délimité par une surface conique (4) et dont le diamètre augmente de plus en plus en direction du joint d'assemblage, ce dispositif comprenant un corps de serrage annulaire (2) en une matière élastique flexible et incompressible, ce corps étant disposé dans l'évidement et ayant, en section transversale, une configuration adaptée au profil de l'évidement tandis que, pour ce corps de serrage (2), on prévoit un dispositif support (6) qui empêche un déplacement axial important de ce corps dans l'évidement au cours de l'introduction de la pièce cylindrique (8), caractérisé en ce que, dans la zone de l'étendue axiale de la surface conique (4), le diamètre intérieur du corps de serrage (2) est légèrement plus grand que le diamètre extérieur de la pièce cylindrique (8) devant venir s'y loger, le corps de serrage (2) venant s'appliquer, dans cette zone, uniquement sur la surface conique (4) et, dans la partie axiale qui n'est pas en prise avec la surface conique (4), le corps de serrage (2) comporte une membrane annulaire (12) s'étendant dans le sens axial et dont le diamètre intérieur est plus petit que le diamètre extérieur de la pièce cylindrique (8) devant venir s'y loger et sur laquelle il vient s'appliquer.

2. Dispositif de fermeture ou d'accouplement selon la revendication 1, caractérisé en ce que la longueur axiale de la membrane annulaire (12) atteint 5 à 15 % du diamètre de la douille cylindrique (8).

3. Dispositif de fermeture ou d'accouplement selon les revendications 1 et 2, caractérisé en ce que l'épaisseur de la membrane annulaire atteint 1 à 3 % du diamètre de la pièce cylindrique (8).

4. Dispositif de fermeture ou d'accouplement selon les revendications 1 à 3, caractérisé en ce que le corps de serrage (2) est constitué de caoutchouc non transformé en mousse.

5. Dispositif de fermeture ou d'accouplement selon les revendications 1 à 4, caractérisé en ce que la surface conique (4) et la pièce cylindrique (8) incluent un angle de 5 à 35°.

6. Dispositif de fermeture ou d'accouplement selon les revendications 1 à 5, caractérisé en ce que la surface conique (4) et la pièce cylindrique (8) incluent un angle de 10 à 18°.

Fig. 1

Fig. 3